# EUROPÄISCHE PATENTSCHRIFT

(11) **EP 1 119 508 B1**
(45) Veröffentlichungstag und Bekanntmachung des Hinweises auf die Patenterteilung: **17.03.2004**
(21) Anmeldenummer: 99944221.3
(22) Anmeldetag: 30.09.1999
(51) Int. Cl.: B65G 25/02, B21D 43/05

(54) **TRANSFERVORRICHTUNG AN EINER PRESSE**
TRANSFERRING DEVICE ON A PRESS
DISPOSITIF DE TRANSFERT ASSOCIE A UNE PRESSE

(30) Priorität: 05.10.1998 CH 202498
(43) Veröffentlichungstag der Anmeldung: 01.08.2001
(73) Patentinhaber: Adval Tech Holding AG, 3172 Niederwangen (CH)
(72) Erfinder: LÜTHI, Rudolf, CH-3172 Niederwangen (CH)
(74) Vertreter: Isler & Pedrazzini AG
(86) Internationale Anmeldenummer: PCT/CH1999/000464
(87) Internationale Veröffentlichungsnummer: WO 2000/020305

(56) Entgegenhaltungen:
- EP-A- 0 490 821
- EP-A- 0 504 098
- US-A- 4 462 521

## Beschreibung

### TECHNISCHES GEBIET

Die vorliegende Erfindung betrifft eine Vorrichtung an einer Presse gemäß dem Oberbegriff des Anspruchs 1 zum schrittweisen Transport von Werkstücken in einer Längsrichtung von einer Aufnahmestation durch mindestens eine Bearbeitungsstation der Presse mit Transportmitteln für die Werkstücke, welche zyklisch und synchron mit der Bewegung der Presse in der Längsrichtung sowie zum Erfassen bzw. wieder Loslassen der Werkstücke in einer dazu senkrechten Querrichtung hin- und herbewegt werden. Derartige Vorrichtungen werden auch als Transfervorrichtungen bezeichnet. Tranfervorrichtungen zeichnen sich gegenüber sogenannten Folgeverbundwerkzeugen dadurch aus, dass das in der Presse umzuformende Teil im Bereich der Aufnahmestation zunächst z.B. von einem Endlosstreifen z.B. durch Abschneiden oder Ausstanzen abgetrennt und anschliessend unabhängig von der Bewegung des Endlosstreifens und zumeist auch senkrecht zu dieser durch die mindestens eine Bearbeitungsstation der Presse transportiert wird. Üblicherweise ist die Presse mit mehreren, hintereinandergeschalteten Bearbeitungsstationen bzw. Umformstufen versehen. Bei den Folgeverbundwerkzeugen wird das umzuformende Teil hingegen durch den eigenen Endlosstreifen, aus dem es stammt, von Umformstufe zu Umformstufe transportiert.

### STAND DER TECHNIK

Eine Transfervorrichtung der genannten Art mit einem Paar von Transportstangen als Transportmitteln für die Werkstücke ist z.B. bekannt aus der EP 0 490 821 A1. Dort erfolgt der Antrieb der Transportstangen durch mechanische Kopplung mit bewegten Teilen der Presse und zwar to Langsrichtung durch Abnahme der Bewegung von der Excenterwelle der Presse uber ein Getriebe und und in Querrichtung durch Abnahme der Bewegung vom Stossel der Presse mittels Steuerschienen, wodurch sich hohe Hubzahlen im Bereich 300 Takte pro Minute realisieren lassen Für spezielle Anwendungen im Dosenbereich werde sogar bis zu 700 Takte pro Minute erreicht. Durch die mechanische Kopplung können auch Kollisionen des Pressenwerkzeugs mit den Transportmitteln weitestgehend verhindert werden

Grundsätzlich ännliche Vorrichtungen sind aus der EP 0 504 09B A1 und dar EP 0 694 350 A1 bekannt, wobei hier den Transportstangen bzw den Werkstücken noch eine vertikale Bewegung übertagert wird.

Daneben sind Transfervorrichtungen bekannt, bei denen der Antrieb der Transportmittel über einen oder mehrere Fremdantriebe unter Verwendung von Servomotoren, Hydraulik. Pneumatik, Linearmotoren, etc. bewirkt wird und welche in verschiedenster Weise signallechnisch mit der Bewegung des Pressenstössels synchronisiert sind. Die US 4 462 521 A ist ein Beispiel mit für Solche Fremdantriebe sind in der Regel billiger und auch flexibler einsetzbar als die vorerwähnten mechanischen Kopplungen, doch können mit ihnen nicht so hohe Hubzahlen erreicht werden. Die Grenze liegt hier derzeit bei 50 - 150 Takten pro Minute. Auch besteht bei Ausfall eines Antriebs die Gefahr einer Kollision zwischen dem Pressenwerkzeug und den Transportmitteln mit meist zerstörerischen Folgen.

### DARSTELLUNG DER ERFINDUNG

Die Erfindung, wie im Patentanspruch 1 gekennzeichnet ist, vereint die Vorteile der vorbekannten Lösungen unter weitgehender Vermeidung ihrer jeweiligen Nachteile. So verwendet die Erfindung einen Fremdantrieb nur für den Antrieb der Transportmittel in der Längsrichtung sowie ggf. auch in der Querrichtung zum Erfassen der Werkstücke, während sie für den Antrieb dieser Mittel in der Querrichtung während der Phase des Wieder-Loslassens der Werkstücke auf eine direkte mechanische Kopplung bzw. Zwangsführung mit der Bewegung der Presse und hier insbesondere direkt mit dem Pressenstössels setzt Überraschend lassen sich mit dieser Antriebskombination Hubzahlen erreichen, die nicht durch den mindestens einen eingesetzten Fremdantrieb wesentlich begrenzt sind, sondern die annähernd denen entsprechen, die mit rein mechanischen Direktantrieben erreicht werden.

Die Erfindung geht von der Erkenntnis aus, dass bezüglich eines Ausfalls von Antriebsmitteln für die Transportmittel allein diejenigen Antriebsmittel wirklich kritisch sind, welche die mit dem Loslassen der Werkstücke verbundene Querbewegung verursachen. Denn bei einem Versagen der mit dem Loslassen verbundenen Bewegung kommt es zwangsläufig zu einer Kollission zwischen den Transportmittel und dem Umformwerkzeug, was in der Regel dessen Beschädigung oder gar Zerstörung zur Folge hat.

Ein Ausfall des Längsantriebs ist diesbezüglich dagegen weniger kritisch, da die Transportmittel, solange der für das Wieder- Loslassen der Werkstücke verantwortliche Mechanismus funktioniert, nicht mit dem Umformwerkzeug kollidieren können. Es entsteht bei diesem Störfall ein Schaden allenfalls an einem oder einer begrenzten Anzahl von Werkstücken. Entsprechends gilt für den Querantrieb der Transportmittel, der das Erfassen der Werkstücke bewirkt.

Indem die Erfindung bezüglich des Querantriebs der Transportmittel zum Wieder-Loslassen der Werkstücke auf eine mechanische Kopplung mit der Bewegung der Presse setzt, vermeidet sie sicher die kritischen Störfälle, die zu einer Beschädigung oder Zerstörung des in der Regel sehr teuren Umformwerkzeugs führen können. Indem die Erfindung andererseits in Bezug auf die übrigen Bewegungskomponenten und hier zumindest in bezug auf den Längsantrieb der Transportmittel einen Fremdantrieb einsetzt, nutzt sie in sinnvoller Weise ein erhebliches Sparpotential aus, da Fremdantriebe wie die der vorgenannten Art wesentlich kostengünstiger zu realisieren sind als die für die mechanische Kopplung der Längsbewegung der Transportmittel mit der Bewegung der Excenterwelle der Presse normalerweise eingesetzten Getriebe. Bei diesen handelt es sich um teuere Teile, unter anderem deshalb, weil sie zur Vermeidung von Schwingungen in sich sehr steif ausgebildet sein müssen. Wegen der von Pressentyp zu Pressentyp zum Teil stark variierenden Lage und Ausbildung der Excenterwelle müssen diese Getriebe zudem an den jeweiligen Maschinentyp angepasst sein, was eine universelle, vom jeweiligen Maschinentyp unabhängige Ausbildung der Transfervorrichtung nicht gestattet. Sofern bei einer bestimmten Presse nur schon die Länge der Längsschritte verändert werden soll, muss das Getriebe für den Längsvorschub häufig komplett ausgetauscht werden. Mit einem Fremdantrieb der vorgenannten Art kann der Längsvorschub dagegen innerhalb gewisser Grenzen ohne mechanische Umbauten einfach durch Veränderung seiner Ansteuerung variiert und auf die jeweiligen Anforderungen flexibel eingestellt werden. Auch stellt hier die Anpassung an verschiedene Pressentypen kein Problem dar.

Die mechanische Kopplung der Transportmittel mit der Bewegung der Presse ausschliesslich zur Realisierung des für das Wieder-Loslassen der Werkstücke verantwortlichen Querantriebs der Transportmittel stellt andererseits keinen wesentlichen Aufwands- und Kostenfaktor dar, weil diese Kopplung in einfachster Weise z.B. direkt über Steuerschienen lösbar ist, die mit einer geeigneten Steuerkurve versehenen sind. Möglich ist dies wegen der in Querrichtung nur vergleichsweise kleinen Wege im Vergleich mit dem Hub des Pressenstössels, so dass die entsprechenden Steuerkurven eine nur geringe Steigung aufweisen müssen. In Längsrichtung, in der die bei jedem Takt zurückzulegenden Wege im Vergleich dazu um einen Faktor 4 - 5 grösser sind, ist eine derart einfache mechanische Kopplung nicht möglich, weshalb hier bisher stets auch die erwähnten aufwendigen Getriebe eingesetzt werden.

Wie bereits erwähnt, können mit der erfindungsgemässen Vorrichtung wesentlich höhere Hubzahlen gefahren werden kann, als mit Systemen, die sowohl für die Längs- als auch die Querbewegung Fremdantriebe einsetzen. Hubzahlen von bis zu 270 Takten pro Minute sind mit einer erfindungsgemässen Vorrichtung schon erreicht worden. Die Hubzahl ist bei der erfindungsgemässen Vorrichtung damit nicht oder zumindest nicht wesentlich durch den oder die eingesetzten Fremdantriebe begrenzt. Dies beruht unter anderem darauf, dass die Transportmittel in Querrichtung stärker schwingungsempfinglich sind als in ihrer Längsrichtung. Wegen der mechanischen Kopplung zwischen den Transportmitteln und dem oder den Umformwerkzeugen in der Querrichtung müssen in dieser Richtung jedoch nur minimalste Zwischenräume eingehalten werden. Auch müssen Schleppfehler, wie sie bei Fremdantrieben auftreten, nicht berücksichtig werden. Dadurch ergibt sich bei der Querbewegung praktisch kein Überschwingen und insgesamt ein sehr ruhiger, schwingungsarmer Lauf der Querbewegung der Transportmittel.

Gegenüber voll fremdgesteuerten Systemen erhöht sich durch die Erfindung auch die Prozess-Sicherheit, da der Fremdantrieb einer Achse wegfällt. Beim Einfahren eines neuen Werkzeugs kann durch einen Programmierfehler kein grösserer Schaden angerichtet werden.

Bevorzugte Ausgestaltungen der Erfindung sind in den abhängigen Ansprüchen gekennzeichnet.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen:
- Fig 1: eine Draufsicht auf den Tisch einer Presse mit einer Transfervorrichtung,
- Fig. 2: eine Stirnansicht der Presse mit Teilen der Transfervorrichtung.
- Fig. 3: einen Teilschnitt nach Linie III-III in Fig 1 in grösserem Massstab, und
- Fig. 4: einen Teil des Längsantriebs der Transfervorrichtung.

### WEGE ZUR AUSFÜHRUNG DER ERFINDUNG

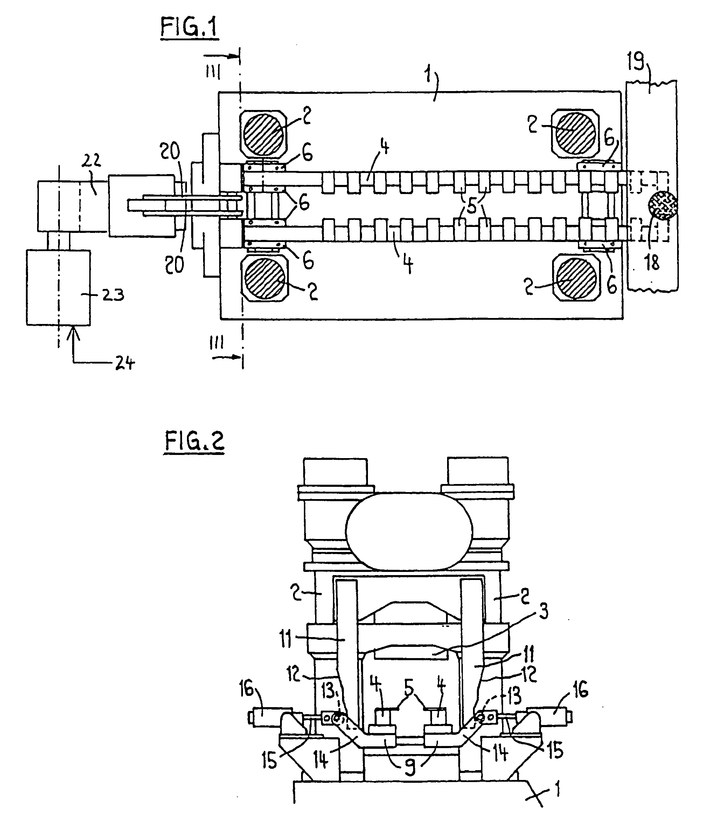

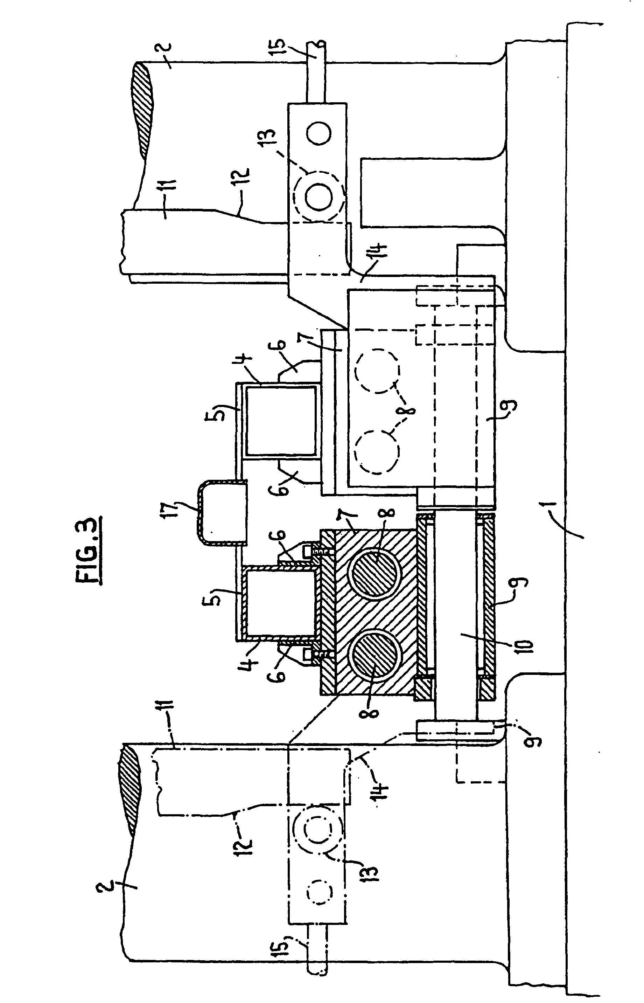

Die Figuren 1 und 2 zeigen mehr oder weniger schematisch einen Pressentisch 1, Führungssäulen 2 und einen Pressenstössel 3. In Oblicher Weise ist auf dem Tisch 1 der Unterteil und am Stössel 3 der Oberteil eines sogenannten Transferwerkzeuges mit mehreren hintereinandergeschalteten Bearbeitungs- bzw. Umformstationen befestigt. Dieses Werkzeug ist in der Zeichnung zur Vereinfachung nicht dargestellt. Als Transportmittel für die umzuformenden Werkstücke in Längsrichtung,durch die einzelnen Umformstationen befindet sich beidseitig des Werkzeuges je eine Transportstange 4 mit rein schematisch dargestellten Greifern 5 für die Werkstücke. Die Enden der Transportstangen sind mittols Befestigungswinkeln 6 auf Längsschlitten 7 montiert. Die Längsschlitten 7 (Figur 3) sind starr längs zweier paralleter Führungsstangen 8 geführt, die ihrerseits in einem Querschlitten 9 befestigt sind, der längs zweier paralleler Quer-Führungsstangen 10 geführt ist.

Die Querbewegung der Transportstangen 4 in Öffnungsrichtung nach aussen wird gesteuert über ein mechanisches Kurvensystem, welcher Steuerschienen 11 mit Steuerkurven 12 und Steuerrollen 13 umfasst. Die Steuerschienen 11, sind am Pressenstössel 3 montiert und wirken mit ihren aussen liegenden Steuerkurven 12 auf die Steuerrollen 13 von Fortsätzen 14 der Schlitten 9. Auf die Fortsätze 14 wirken andererseits die Kolbenstangen 15 von pneumatischen Zylindern 16 in umgekehrter Richtung nach innen. Es wirkt damit stets ein zuverlässiger Anpressdruck in Schliessrichtung nach innen auf die Fortsätze 14, so dass die Steuerrollen 13 stets auch sicher an den Steuerkurven 12 der Steuerschienen 11 anliegen. Aus den Figuren 2 und 3 ist ersichtlich, dass bei der Abwärtsbewegung der Steuerschienen 11 mit dem Pressenstössel 3 die Steuerrollen 13 und die damit verbundenen Teile, d.h. auch die Transportstangen 4. auswärtsgespreizt werden, so dass ein zwischen zwei gegenüberliegenden Haltern 5 geklemmtes Werkstück 17 freigegeben wird. Die Halter 5 werden dabei auch aus dem Bereich der oberen und unteren Werkzeugteile der Presse seitlich entfernt, so dass sich das Werkzeug zur Bearbeitung von Werkstücken in allen Stationen schliessen kann.

In Figur 1 ist angedeutet, dass in einer Stanz- und Aufnahmestation Werkstücke wie z.B. Rohlinge 18 aus einem querdurchlaufenden Band 19 ausgestanzt und von den äussersten Greifern der Transportstangen 4 übernommen werden. In aufeinanderfolgenden Arbeitszyklen werden die Werkstücke 18 schrittweise nach links verschoben und somit nacheinander den einzelnen Umformstationen des Transferwerkzeugs zugeführt. Nach einer gewissen Anlaufzeit sind sämtliche Umformstationen mit je einem Werkstück 18 belegt. Pro Arbeitszyklus führen die Transportstangen 4 eine geschlossene rechteckige Bewegung aus, indem sie in einem ersten Takt eine Anzahl erfasster Rohlinge zur nächstfolgenden Umformstation des Transferwerkzeugs vorschieben, in einem zweiten Takt seitlich nach aussen von dem Werkstücken und aus dem Überdeckungsbereich mit dem Werkzeug entfernt werden, in einem dritten Takt in Längsrichtung wieder zurückgeführt und in einem vierten Takt zum Erfassen der Werkstücke wieder nach innen zum Werkzeug hin bewegt werden.

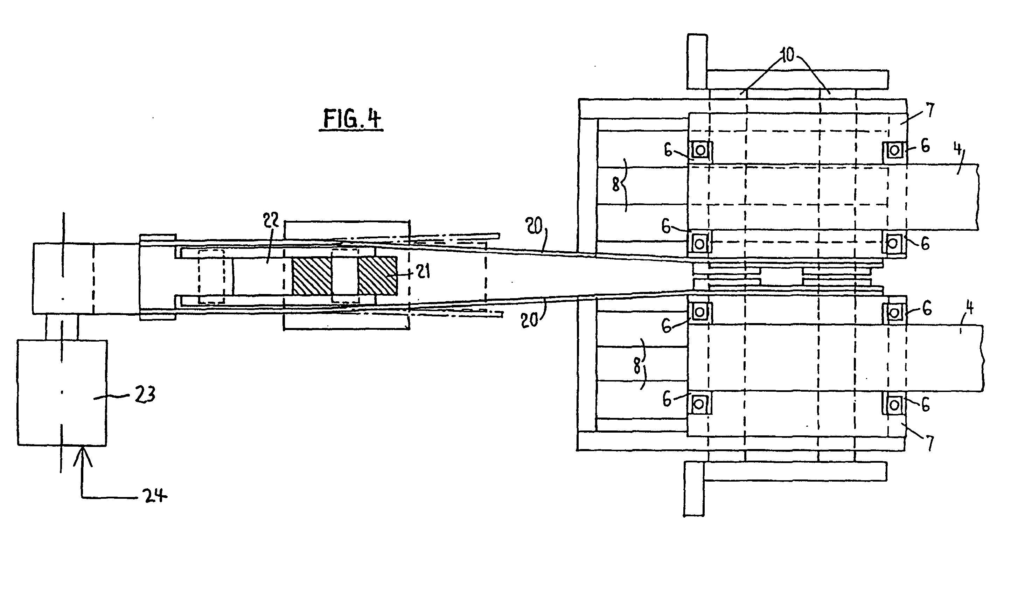

Der Längsantrieb der Transportstangen 4 umfasst zwei Blattfedern 20, die mit ihren rechten Enden an der Innenseite der Längsschlitten 7 befestigt sind und die, wie in Figur 4 angedeutet, den Querbewegungen der Transportstangen 4 folgen können. An ihrem linken Ende sind die beiden Blattfedern 20 mit einem in Längsrichtung hin- und her bewegbaren Führungsschlitten 21 verbunden, der von einem elektrischen Servomotor 23 über einen Zahnriemen 22 angetrieben wird. Der Servomotor 23 ist mit einem Steuersignal 24 beaufschlagt, das mit einem nicht dargestellten Winkeldrehgeber von der Bewegung der Excenterwelle der Presse abgeleitet ist.

Anstelle des Servomotors 23 könnte ebensogut ein Hydraulikmotor oder ein Linearmotor eingesetzt werden. Schliesslich könnten statt eines Motors und dem Zahnriemen 22 auch einfach ein Pneumatik- oder einen Hydraulikzylinder eingesetzt werden.

## Patentansprüche

1. Vorrichtung an einer Presse (1 - 3) zum schrittweisen Transport von Werkstücken (18) in einer Langsrichtung von einer Aufnahmestation durch mindestens eine Bearbeitungsstation der Presse, wobei die Vorrichtung Transportmittel (4) für die Werkstücke aufweist, welche zyklisch und synchron mit den Hubbewegungen der Presse hin- und herbewegt werden und zwar einerseits in der Längsrichtung sowie andererseits zum Erfassen bzw. wieder Loslassen der Werkstücke in einer dazu senkrechten Querrichtung und wobei mechanische Kopplungsmittel zwischen der Presse und den Transportmitteln vorgesehen sind, um die Bewegung der Transportmittel zum Loslassen der Werkstücke in der Querrichtung direkt mit den Hubbewegungen der Presse mechanisch zu koppeln, **dadurch gekennzeichnet, dass** für die Bewegung der Transportmittel in der Längsrichtung ein Fremdantrieb (20-24) vorgesehen ist, welcher mit den Hubbewegungen der Presse lediglich synchronisiert ist und welcher bezüglich der Länge der von ihm erzwungenen Transportschritte in gewissen Genzen ohne mechanische Veränderungen allein über seine Ansteuerung variierbar ist

2. Vorrichtung nach Anspruch 1, **dadurch gekennzeichnet, dass** zur Bewegung der Transportmittel (4) zum Ergreifen der Werkstücke in der Querrichtung ebenfalls ein Fremdantrieb (16) vorgesehen ist.

3. Vorrichtung nach Anspruch 1 oder 2, **dadurch gekennzeichnet, dass** der oder die Fremdantriebe einen Servomotor (23), einen Linearmotor, einen Hydraulikmotor, einen Hadraulikzylinder oder einen Pneumatikzylinder (16) umfassen.

4. Vorrichtung nach einem der Ansprüche 1 - 3, **dadurch gekennzeichnet, dass** ein Winkeldrehgeber vorgesehen ist, welche ein die Drehstellung einer Excenterwelle der Presse repräsentierendes Signal (24) erzeugt und dass der Fremdantrieb zur Bewegung der Transportmittel in der Längsrichtung mit diesem Signal beaufschlagt und durch dieses Signal gesteuert wird.

5. Vorrichtung nach einem der Ansprüche 1 - 4, **dadurch gekennzeichnet, dass** mit ihr Hubzahlen von bis zu 270/min erreichbar sind

6. Vorrichtung nach einem der Ansprüche 1 - 5, **dadurch gekennzeichnet, dass** die Presse einen die Hubbewegungen ausführenden Pressenstössel (3) aufweist und dass der Antrieb der Transportmittel zum Loslassen der Werkstücke in der Querrichtung über ein mechanisches Kurvensystem (11,12) von den Hubbewegungen des Pressenstössels (3) abgeleitet ist.

7. Vorrichtung nach einem der Ansprüche 1 - 6, **dadurch gekennzeichnet, dass** die Transportmittel Transportstangen (4) umfassen, welche sich in Längsrichtung zu beiden Seiten der Aufnahme- sowie der mindestens einen Bearbeitungsstation erstrecken und welche vorzugsweise mit Greifern (5) für die Werkstücke besetzt sind.

## Claims

1. Apparatus on a press (1-3) for the stepwise transportation of workpieces (18) in a longitudinal direction from a receiving station to at least one processing station of the press, it being the case that the apparatus has transporting means (4) for the workpieces which are moved back and forth cyclically and synchronously with the stroke movements of the press, to be precise, on the one hand, in the longitudinal direction and, on the other hand, in order to grasp and/or release the workpieces again, in a transverse direction perpendicular to the longitudinal direction, and it being the case that mechanical coupling means are provided between the press and the transporting means in order for the movement of the transporting means for releasing the workpieces in the transverse direction to be coupled directly in a mechanical manner to the stroke movements of the press, **characterized in that** provided for the movement of the transporting means in the longitudinal direction is an external drive (20-24) which is merely synchronized with the stroke movements of the press and, in terms of the length of the transporting steps brought about by it, can be varied within certain limits, without any mechanical changes, solely via activation.

2. The apparatus as claimed in claim 1, **characterized in that** an external drive (16) is likewise provided for moving the transporting means (4) for gripping the workpieces in the transverse direction.

3. The apparatus as claimed in claim 1 or 2, **characterized in that** the external drive or drives comprises/comprise a servomotor (23), a linear motor, a hydraulic motor, a hydraulic cylinder or a pneumatic cylinder (16).

4. Apparatus according to one of claims 1-3, **characterized in that** there is provided a rotary encoder which produces a signal (24) representing the rotary position of an eccentric shaft of the press, and **in that** the external drive, for moving the transporting means in the longitudinal direction, is exposed to this signal and controlled by this signal.

5. The apparatus as claimed in one of claims 1-4, **characterized in that** it can be used to achieve up to 270 strokes per minute.

6. The apparatus as claimed in one of claims 1-5, **characterized in that** the press has a press ram (3) which executes the stroke movements, and **in that** the drive of the transporting means for releasing the workpieces in the transverse direction is derived from the stroke movements of the press ram (3) via a mechanical cam system (11, 12).

7. The apparatus as claimed in claims 1-6, **characterized in that** the transporting means comprise transporting bars (4) which extend in the longitudinal direction on both sides of the receiving station and of the at least one processing station and are provided preferably with grippers (5) for the workpieces.

## Revendications

1. Dispositif sur une presse (1 - 3) pour le transport pas à pas de pièces (18) dans une direction longitudinale depuis un poste de réception par au moins un poste de traitement de la presse, le dispositif présentant des moyens de transport (4) pour les pièces, lesquels sont déplacés d'avant en arrière de manière cyclique et synchronisée avec les mouvements de levage de la presse et ce d'une part dans la direction longitudinale ainsi que d'autre part pour saisir ou à nouveau relâcher les pièces dans une direction transversale à celle-ci et où des moyens d'accouplement mécaniques entre la presse et les moyens de transport sont prévus pour accoupler mécaniquement le mouvement des moyens de transport pour relâcher les pièces dans la direction transversale directement aux mouvements de levage de la presse, **caractérisé en ce que** pour le mouvement des moyens de transport dans la direction longitudinale, on prévoit un entraînement extérieur (20 - 24) qui est seulement synchronisé aux mouvements de levage de la presse et qui peut être varié en ce qui concerne la longueur des pas de transport qu'il génère dans certaines limites sans modifications mécaniques, simplement par le biais de sa commande.

2. Dispositif selon la revendication 1, **caractérisé en ce que** pour le mouvement des moyens de transport (4) pour saisir les pièces dans la direction transversale, on prévoit également un entraînement extérieur (16).

3. Dispositif selon la revendication 1 ou 2, **caractérisé en ce que** le ou les entraînements extérieurs comprennent un servomoteur (23), un moteur linéaire, un moteur hydraulique, un vérin hydraulique ou un vérin pneumatique (16).

4. Dispositif selon l'une quelconque des revendications 1 à 3, **caractérisé en ce que** l'on prévoit un capteur angulaire qui produit un signal (24) représentant la position de rotation d'un arbre excentré de la presse et **en ce que** l'entraînement extérieur est sollicité par ce signal pour produire le mouvement des moyens de transport dans la direction longitudinale et est commandé par ce signal.

5. Dispositif selon l'une quelconque des revendications 1 à 4, **caractérisé en ce que** l'on peut obtenir avec lui des nombres de levées jusqu'à 270/min.

6. Dispositif selon l'une quelconque des revendications 1 à 5, **caractérisé en ce que** la presse présente un poinçon de presse (3) réalisant des mouvements de levage et **en ce que** la commande des moyens de transport pour relâcher les pièces dans la direction transversale est dérivée des mouvements de levage du poinçon de presse (3) par le biais d'un système de cames mécanique (11, 12).

7. Dispositif selon l'une quelconque des revendications 1 à 6, **caractérisé en ce que** les moyens de transport comprennent des tiges de transport (4) qui s'étendent dans la direction longitudinale vers les deux côtés du poste de réception ainsi que de l'au moins un poste de traitement et sont de préférence équipées de pinces de préhension (5) pour les pièces.
